# EUROPEAN PATENT APPLICATION

(11) **EP 2 854 047 A1**
(43) Date of publication of application: **01.04.2015**
(21) Application number: 14185465.3
(22) Date of filing: 19.09.2014
(51) Int. Cl.: G06F 17/30, G06F 21/10

(54) **Automatic keyword tracking and association**

(30) Priority: 27.09.2013 US 201314039343
(71) Applicant: Konica Minolta Laboratory U.S.A., Inc., San Mateo CA 94403 (US)
(72) Inventor: Wu, Philip, San Mateo, CA California 94403 (US)
(74) Representative: Gille Hrabal

(57) **Abstract**

A method for automatic keyword tracking and rights association of digital document files, including the steps of: a computer server receiving an upload of a digital document file: the computer server applying a keyword tracking algorithm to the texts of the uploaded digital document file to gather content information of the uploaded digital document file by parsing each word in the document and keeping track of the number of occurrences of a set of keywords, and comparing the content information of the uploaded digital document file with content information of digital document files that have known rights-association, wherein a pre-defined list of words are excluded from the set of keywords; and the computer server determining whether one or more matching results from the digital document files with known rights-association exist, and if not, notifying the user, but if yes, presenting the one or more matching results to the user.

## Description

### BACKGROUND OF THE INVENTION

### Field of the Invention

This invention relates to a method of managing digital document files, and in particular, it relates to automatic keyword tracking and association for management of digital document files.

### Description of Related Art

Digital document files are widely used in modem document management technologies. Documents that are traditionally printed, distributed and viewed in hard (paper) copies are increasingly available as electronic digital files in various formats, such as the portable document format (PDF).

For example, a publishing or printing service provider may provide an online platform such as a "webstore" which allows users to upload digital document files for use in creation of customized booklets therefrom. Prior to uploading a digital document file, the user must enter information regarding the contents of the document, such as the title, description, author, year, publisher, *etc.* This information is often used to obtain clearance and rights from third party sources or rights management centers who may own rights to the uploaded document.

In existing practices, such information sent to the third parties is based solely on information entered manually by the user. This manual process is often laborious, and prone to human errors by the users as they manually typing in the required information.

### SUMMARY

To address the abovementioned problem and/or other shortcoming, the embodiments of the present invention are directed to a new method of automatic keyword tracking and association for management of digital document files.

Automating the process of gathering document information can help streamline the workflow of uploading and clearing a document. The digital document files uploaded by the users now may come in a variety of formats, e.g., scanned literature in image files, documents in PDF, *etc.* An object of the present invention is to provide a reliable way of extracting the information from the digital files to compare to a known repository of copyrighted materials, such that keywords in the documents can be automatically tracked and correctly associated with the matched materials.

Additional features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

To achieve these and/or other objects, as embodied and broadly described, an exemplary embodiment of the present invention provides a method for automatic keyword tracking and rights association of digital document files, including the steps of: a computer server receiving an upload of a digital document file: the computer server applying a keyword tracking algorithm to the texts of the uploaded digital document file to gather content information of the uploaded digital document file by parsing each word in the document and keeping track of the number of occurrences of a set of keywords, and comparing the content information of the uploaded digital document file with content information of digital document files that have known rights-association, wherein a pre-defined list of words are excluded from the set of keywords; and the computer server determining whether one or more matching results from the digital document files with known rights-association exist, and if not, notifying the user, but if yes, presenting the one or more matching results to the user.

In another aspect, one exemplary embodiment of the present invention further provides a computer program product that causes a data processing apparatus to perform the above described methods. The computer program product includes a computer usable non-transitory medium (e.g. memory or storage device) having a computer readable program code embedded therein for controlling a data processing apparatus, the computer readable program code configured to cause the data processing apparatus to execute the above described processes.

It is to be understood that both the foregoing general description and the following detailed description are exemplary and explanatory and are intended to provide further explanation of the invention as claimed.

### BRIEF DESCRIPTION OF THE DRAWINGS

Fig. 1 is a schematic block diagram illustrating an exemplary online environment according to an embodiment of the present invention.
Fig. 2 is a schematic block diagram illustrating an exemplary data processing apparatus such as a computer or server according to the embodiment of the present invention shown in Figure 1.
Fig. 3 is a schematic block diagram illustrating an exemplary printing or copying device such as a print server having a data processing unit according to the embodiment of the present invention shown in Figure 1.
Fig. 4 is a flow chart diagram illustrating a user overview of an exemplary process according to one of the embodiments of the present invention.
Fig. 5 is a flow chart diagram illustrating an algorithmic comparison overview of an exemplary process according to one of the embodiment of the present invention.

### DETAILED DESCRIPTION OF PREFERRED EMBODIMENTS

Embodiments of the present invention provide a method and system for automatic keyword tracking and association for management of digital document files. The present invention method may be implemented by a computer software program, saved in a computer usable non-transitory medium that has program codes and instructions for implementing the steps of the various processes in accordance with the present invention.

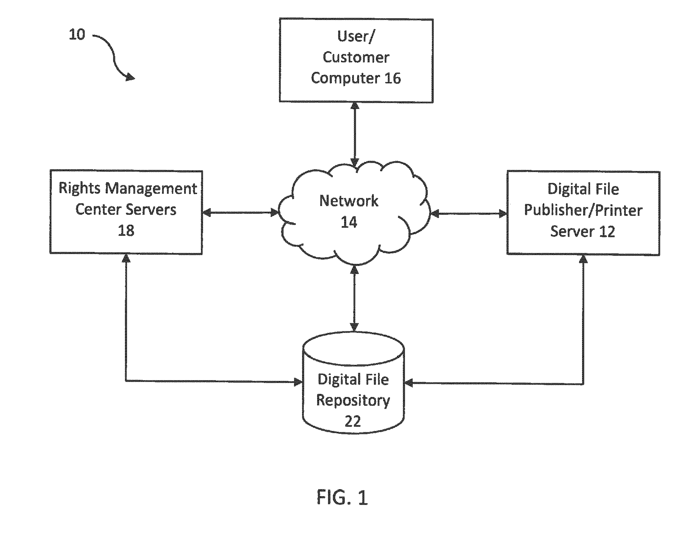

Referring to Figure 1, there is shown a schematic block diagram illustrating an exemplary online system set up or arrangement 10 in which various embodiments of the present invention may be implemented. The exemplary online system 10 includes one or more digital document file publishing or printing service servers 12. Server 12 is connected to an open interconnected computer network such as the Internet 14. The computer program implementing the various processes of the embodiments of the present invention may be installed on and executed by server 12.

The digital file publisher/printer server 12 is connected via the Internet 14 with one or more user or consumer computers 16, and one or more rights management center servers 18. In this application, the term "user" generally refers to a user, a customer, or anyone who uses the method or related apparatus provided by the embodiments of the present invention.

The exemplary system 10 also includes a digital file repository 22 which may be an internal or external electronic storage device accessible by the digital file publisher/printer server 12 and/or the rights management center server 18. The file repository 22 may also be accessible via the Internet 14. The file repository 22 is used for saving and storing documents in digital formats such as PDF files.

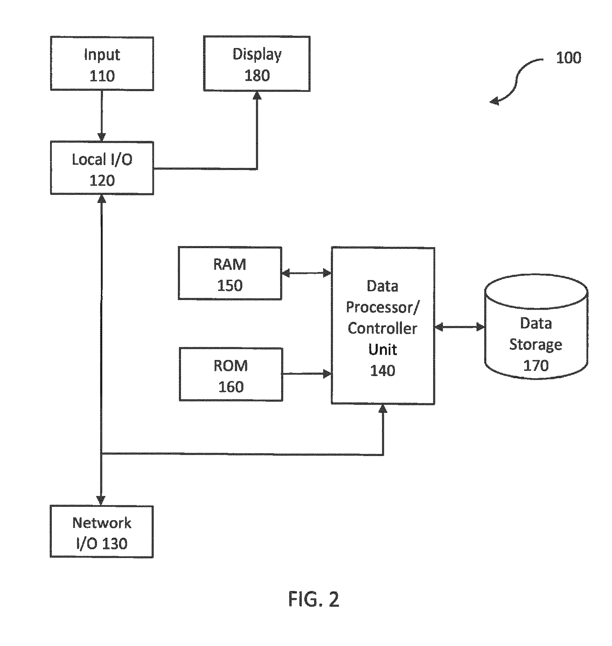

Referring to Figure 2, there is shown a schematic block diagram illustrating an exemplary data processing apparatus such as a computer or server 100, whereupon various embodiments of the present invention may be implemented. The computer or server 100 typically includes an input device 110 including, for example, a keyboard and a mouse.

The input device 110 may be connected to the data processing apparatus 100 through a local input/output (I/O) port 120 to enable an operator and/or user to interact with the data processing apparatus 110. The computer or server 100 typically also has a network I/O port 130 for connection to a network such as the Internet so that the computer or server 100 may remotely communicate with the other computers and servers connected to the Internet.

The computer or server 100 typically has a data processor/controller unit 140 such as a central processor unit (CPU) that controls the functions and operations of the computer or server 100. The data processor/controller unit 140 is connected to various memory devices such as a random access memory (RAM) device 150, a read only memory (ROM) device 160, and a storage device 170 such as a hard disc drive or solid state memory. The storage device 170 may be an internal memory device or an external memory device. The computer software programs and instructions for implementing the various embodiments of the present invention may be installed or saved on one or more of these memory devices.

The data processor/controller unit 140 executes these computer software programs and instructions to perform the functions and carry out the operations to implement the process steps of the various embodiments of the present invention.

The computer or server 100 typically also include a display device 180 such as a video monitor or display screen. The input device 110 and the display device 180 together provide a user interface (UI) which allows a user to interact with the computer or server 100 to perform the steps of the process according to the various embodiments of the present invention. The input device 110 and the display device 180 may be integrated into one unit, such as a touch screen, to provide the UI for user interaction with the computer or server 100.

It is understood that data processing apparatus 100 may be any suitable computer or computer system. Preferably for use by a digital file management service provider, the data processing apparatus 100 is a server computer. However, for use by a customer of the digital management service, the data processing apparatus 100 may be a desktop computer, a laptop computer, a notebook computer, a netbook computer, a tablet computer, a hand-held portable computer or electronic device, a smart phone, or any suitable data processing apparatus that has suitable data processing capabilities.

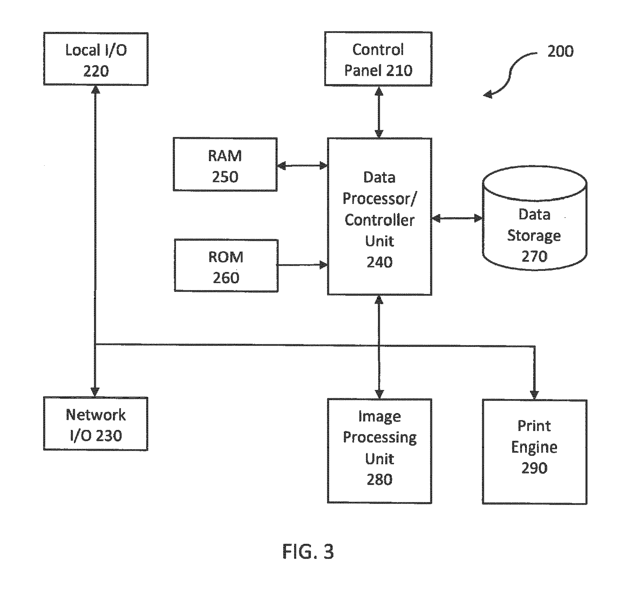

Referring to Figure 3, there is shown a schematic block diagram illustrating another exemplary data processing apparatus embodied in a document reproduction device such as a print server 200, whereupon various embodiments of the present invention may also be implemented. The print server 200 typically includes an integrated control panel 210 which includes a keypad and a display screen, or a touch screen that provides both the input and display functions.

The print server 200 may have a local I/O port 220 for connection with other local devices such as a computer. The print server 200 typically also has a network I/O port 230 for connection to a network such as the Internet so that the printer or copier 200 may remotely communicate with the other computers and servers connected to the Internet.

The print server 200 typically has a data processor/controller unit 240 that controls the functions and operations of the print server 200. The data processor/controller unit 240 is connected to various memory devices such as a RAM device 250, a ROM device 260, and a storage device 270 such as a hard disc drive or solid state memory. The storage device 270 may be an internal memory device or an external memory device. The computer software programs and instructions for implementing the various embodiments of the present invention may be installed or saved on one or more of these memory devices.

The data processor/controller unit 240 executes these computer software programs and instructions to perform the functions and carry out the operations to implement the process steps of the various embodiments of the present invention.

It is understood that the data processing apparatus 200 may be any suitable document reproduction device or system, such as a printer, a copier, a scanner, a facsimile machine, an all-in-one printer, a printing system, a print server, or any suitable document reproduction device that has suitable data processing capabilities.

Referring back to Figure 1, in an exemplary online environment as shown in Figure 1, the digital file publisher/printer server 12 can allow users to upload digital files from their computer 16 via the network connection 14. In order to obtain clearance and rights to use a digital document file from the third party rights management center server 18, content information of the digital document file need to be provided to rights management center server 18.

Described generally, the exemplary embodiments of the present invention are designed to automate the process of gathering the content information of digital document files which are useful or may be needed in obtaining rights and authorization to use the files, therefore helping streamline the workflow of uploading and clearing digital document files.

The exemplary embodiments of the present invention are also designed to provide a reliable way of matching the digital document file with a copyrighted material, if any, by extracting the document content information from the digital document file and comparing it with a known repository of copyrighted materials. Digital document files uploaded by the users may come in a wide variety of formats. By parsing the entire text of the document and keeping track of certain keywords, the extracted information can be compared to known copyrighted materials, which have been parsed in the same manner, with a high level of certainty.

The exemplary embodiments of the present invention further utilizes a keyword tracking algorithm which parses each word in a document and keeps track of the number of occurrences of a set of keywords. To avoid tracking an excessive amount of words, a user or an administrator may choose to pre-define a list of words and phrases to ignore. In other words, in order to avoid extracting and saving an excessive amount of keywords, it may be advantageous to specify a list of words and/or phrases for the keyword tracking algorithm to ignore. These are generally words that are extremely common. Examples of such words can be the most commonly used words in the English language, e.g., the, be, to, of, and, a, in, that, have, I, it, for, not, on, with, he, as, you , do, at, *etc.*

Excluding any words and phrases in a list such as one defined above, as the rest of the document is parsed, each unique word will be saved to a list in memory starting at a count of one (1). Any time the word is subsequently encountered, this count is incremented. Once the document has been fully parsed, it can be compared to a repository of known material that has already been parsed in the same manner.

In addition, the exemplary embodiments of the present invention utilizes a threshold, which can be set by the user or administrator, in order to account for differences in publications, versions, and minor differences in documents. This is to ensure that minor variations, such as forwards/introductions, epilogues, indexes, *etc.,* in a document do not necessarily exclude matching documents whose contents are likely to remain largely the same.

The threshold for acceptance is specified to account for minor variations in text, such as forwards/introductions, epilogues, indexes, *etc*.. For example, if an administrator believes that the parsed keywords should match a minimum of 90%, then each count of a word must vary by no more than 10% from a known document. In other words, at a 90% threshold, if a known document contains the word "computer" 100 times, a document to be compared with the known document must contain the word "computer" between 90 and 110 times for the algorithm to consider this a potentially positive match.

It is understood that automation can also be achieved in conjunction with user input, but not necessarily requiring it. This is because by scanning and parsing the information contained in an uploaded document file, a user may not necessarily need to enter in any information. This automating feature becomes especially advantageous should the user choose to upload multiple files simultaneously. This will allow the clearance process to more closely pinpoint matching documents from a third party and can potentially reduce the confusion when presenting the user with potential matches. Any metadata associated with the document, but not part of the document itself, can also be sent to the third party sources for further accuracy.

As more and more documents are parsed and added to the file repository, the repository's knowledge base is expanded. When varying matches are confirmed by the user, the parsed text can also be added to the repository with an association to the selected copyrighted material.

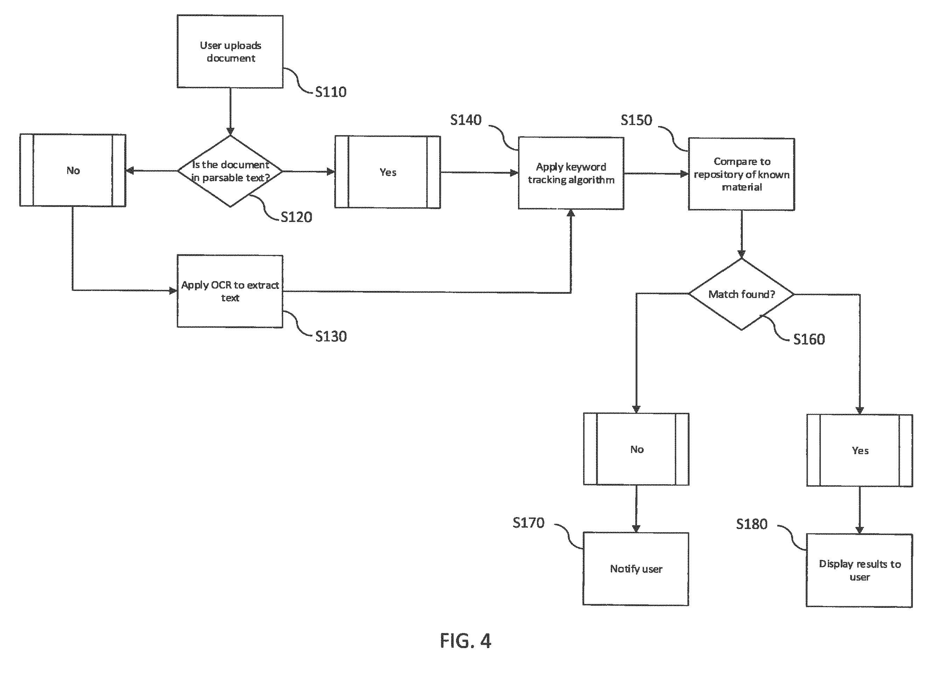

Referring to Figure 4, there is shown a flow chart diagram illustrating a user overview of an exemplary process according to one of the embodiments of the present invention, as will be described in detail below.

At Step S110, a user uploads a digital document file or a batch of digital document files to the digital file publisher/printer server. In other words, the digital file publisher/printer server receives the digital document file(s) uploaded by the user. At this point, the user may be provided an option of entering any pertinent information about the digital document file(s) if the user wishes.

Once the digital file publisher/printer server receives the successfully uploaded digital document files, it begins processing these files by executing computer software program or application installed on the server. First, as Step S120, the digital file publisher/printer server determined whether an uploaded digital document file is in a parsable text format. If it is not, then at Step S 130 the digital file publisher/printer server will apply an optical character recognition (OCR) software to extract the texts from the digital document file.

At Step S140, the digital file publisher/printer server applies a keyword tracking algorithm according to one exemplary embodiment of the present invention method to the parsable or extracted texts of the document file to gather content information of the uploaded digital document file. Any information that is able to be properly parsed or extracted is saved. In the keyword tracking algorithm, as mentioned above, it parses each word in the document and keeps track of the number of occurrences of a set of keywords. The tracking result may be referred to as a profile of the digital document file.

At Step S150, using a combination of user provided information, extracted and parsed data, as well as any external metadata which may have been provided with the document or by the user, the digital file publisher/printer server contacts the rights management center server and/or the file repository to attempt to find any clearance rights.

At Step 160, the digital file publisher/printer server compares the content information of the uploaded file (including the profile thereof) with the information of known materials (including the profiles thereof prepared through the same algorithm) stored in the repository to determine whether there is a match. If no matching is found, the user is notified at Step S170. On the other hand, if one or more matches are found, which means that clearance rights for the uploaded file have been found, then at Step S180 the matching results are provided to the user via a user interface (UI), for example displayed to the user via a display screen. At this point the user is provided with the option of selecting one of the matching results.

For machine learning purposes and as well as for general knowledge expansion, any successfully parsed documents may be added to the repository as well. If the user feels that a matching result is sufficient, newly added documents will be associated with the same copyrighted material in the repository.

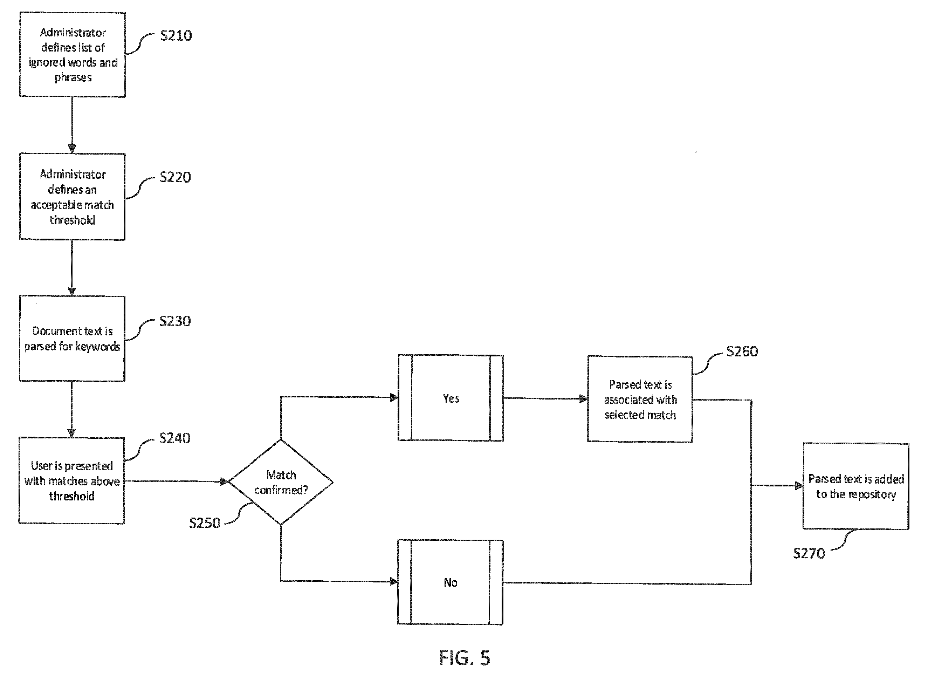

Referring to Figure 5, there is shown a flow chart diagram illustrating an algorithmic comparison overview of an exemplary process according to one of the embodiment of the present invention.

At Step S210, an administrator or user/editor defines a list of words or phrases to be ignored by the keyword tracking algorithm. The digital file publisher/printer server receives and stores this list of ignored words or phrases and uses it with the keyword tracking algorithm.

At Step S220, the administrator or user/editor defines an acceptable match threshold. The digital file publisher/printer server receives and stores this acceptable threshold and applies it to the keyword tracking algorithm.

At Step S230, the digital file publisher/printer server applies the keyword tracking algorithm to the document file to parse and/or extract the keywords.

At Step S240, the digital file publisher/printer server presents to the user with matching results that are above the threshold of the keyword tracking algorithm, providing an option to the user to confirm/select or reject/ignore a matching result that is presented to the user.

At Step S250, the digital file publisher/printer server receives the user's decision to either confirm/select or reject/ignore a matching result that is above the threshold of the keyword tracking algorithm.

At Step S260, if the digital file publisher or printer server receives the user's confirmation/selection of a matching result, then the parsed or extract keyword is associated with the selected matching result.

At Step S270, the parsed or extracted texts are added to the repository.

The above described process may be implemented by a computer software program. The various embodiments of the present invention also provides a computer program product that includes a computer usable non-transitory medium (e.g. memory or storage device) having a computer readable program code embedded therein for controlling a data processing apparatus, the computer readable program code configured to cause the data processing apparatus to execute the above described process.

The exemplary embodiments of the present invention have many advantageous features. The exemplary embodiments of the present invention provide more precise search results. By sending any information able to be parsed or extracted to the rights management center server, more accurate search results can be obtained. More specifically, comparing to the conventional method where information on the contents of a digital document file is necessarily provided through the user's manual input, the amount of the keywords that can be reliably used for the search certainly grows, whereby the accuracy of search results increase.

The exemplary embodiments of the present invention also provide a streamlined process. The users compiling large publications can save time and effort by not necessarily having to manually enter information related to each document each time such document is uploaded. Having an automated process allows the user to upload a batch of documents, rather than individual documents.

In addition, the exemplary embodiments of the present invention increase the knowledge base of the keyword tracking algorithm. The comparison tools become more accurate as more documents are parsed or extracted, and can be added to the existing repository.

Moreover, the exemplary embodiments of the present invention enable machine learning capability. While no all documents will be a perfect 100% match, users may select copyrighted material that in general or overall has the same content but perhaps with a small degree of variance. When the matching portions are above a predefined acceptability threshold, the user may be able to identify that the overall content is the same. In turn, different variations of the same copyrighted material can be learned. The more that is learned the more accurate further results will be in the future.

Still further, the exemplary embodiments of the present invention provide ease of batch processing. Since a user does not necessarily need to manually enter any information, a large batch of files can be uploaded and processed simultaneously. The user can return at a later time to be presented with any matching results for confirmation, once processing has been completed.

It will be apparent to those skilled in the art that various modification and variations can be made in the method and related apparatus of the present invention without departing from the spirit or scope of the invention. Thus, it is intended that the present invention cover modifications and variations that come within the scope of the appended claims and their equivalents.

## Claims

1. A method for automatic keyword tracking and rights association of digital document files, comprising the steps of:
a computer server receiving an upload of a digital document file;
the computer server applying a keyword tracking algorithm to the texts of the uploaded digital document file to gather content information of the uploaded digital document file by parsing each word in the document and keeping track of the number of occurrences of a set of keywords, and comparing the content information of the uploaded digital document file with content information of digital document files that have known rights-association, wherein a pre-defmed list of words are excluded from the set of keywords; and
the computer server determining whether one or more matching results from the digital document files with known rights-association exist, and if not, notifying the user, but if yes, presenting the one or more matching results to the user.

2. The method of claim 1, wherein the tracking result forms a profile of the digital document file.

3. The method of claim 1, further comprising a step of the computer server determining whether the uploaded digital document file is in parsable texts, and if not, applying an optical character recognition procedure to extract texts from the uploaded digital document file;

4. The method of claim 1, wherein the computer server uses a pre-defmed threshold when comparing the content information of the digital document file with the content information of the digital document files that have known rights-association.

5. The method of claim 4, further comprising a step of the computer server presenting to the user only matching results that are above the threshold.

6. The method of claim 1, further comprising a step of the computer server receiving the user's decision to either select or reject a matching result presented to the user.

7. The method of claim 6, further comprising a step of the computer server associating the uploaded digital document file with a user selected matching result.

8. The method of claim 1, further comprising a step of the computer server contacting a repository of digital document files that have known rights-association.

9. The method of claim 8, further comprising a step of the computer server adding the parsed or extracted texts of the uploaded digital document file to the repository.

10. The method of claim 1, further comprising a step of the computer server contacting a rights management server to obtain rights based on content information of the uploaded digital document file.

11. A computer program product comprising a non-transitory computer usable medium having a computer readable code embodied therein for controlling a data processing apparatus, the computer readable program code configured to cause the data processing apparatus to execute a process for automatic keyword tracking and rights association of digital document files, the process comprising the steps of:
a computer server receiving an upload of a digital document file;
the computer server applying a keyword tracking algorithm to the texts of the uploaded digital document file to gather content information of the uploaded digital document file by parsing each word in the document and keeping track of the number of occurrences of a set of keywords, and comparing the content information of the uploaded digital document file with content information of digital document files that have known rights-association, wherein a pre-defined list of words are excluded from the set of keywords; and
the computer server determining whether one or more matching results from the digital document files with known rights-association exist, and if not, notifying the user, but if yes, presenting the one or more matching results to the user.

12. The computer program product of claim 11, wherein the tracking result forms a profile of the digital document file.

13. The computer program product of claim 11, wherein the process further comprises a step of the computer server determining whether the uploaded digital document file is in parsable texts, and if not, applying an optical character recognition procedure to extract texts from the uploaded digital document file;

14. The computer program product of claim11, wherein the computer server uses pre-defined threshold when comparing the content information of the digital document file with the content information of the digital document files that have known rights-association.

15. The computer program product of claim 14, wherein the process further comprises a step of the computer server presenting to the user only matching results that are above the threshold.

16. The computer program product of claim 11, wherein the process further comprises a step of the computer server receiving the user's decision to either select or reject a matching result presented to the user.

17. The computer program product of claim 16, wherein the process further comprises a step of the computer server associating the uploaded digital document file with a user selected matching result.

18. The computer program product of claim 11, wherein the process further comprises a step of the computer server contacting a repository of digital document files that have known rights-association.

19. The computer program product of claim 18, wherein the process further comprises a step of the computer server adding the parsed or extracted texts of the uploaded digital document file to the repository.

20. The computer program product of claim 11, wherein the process further comprises a step of the computer server contacting a rights management server to obtain rights based on content information of the uploaded digital document file.
